(19) Europäisches Patentamt
European Patent Office
Office européen des brevets

(11) EP 4 773 072 A1

(12) EUROPEAN PATENT APPLICATION
published in accordance with Art. 153(4) EPC

(43) Date of publication:
08.07.2026 Bulletin 2026/28

(21) Application number: 24925282.6

(22) Date of filing: 22.02.2024

(51) International Patent Classification (IPC):
G06T 5/90 (2024.01)

(52) Cooperative Patent Classification (CPC):
G06T 5/90

(86) International application number:
PCT/CN2024/078170

(87) International publication number:
WO 2025/175530 (28.08.2025 Gazette 2025/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicants:
• VeriSilicon Microelectronics (Chengdu) Co., Ltd.
Chengdu, Sichuan 610041 (CN)
• VeriSilicon Microelectronics (Shanghai) Co., Ltd.
Shanghai 201203 (CN)
• VeriSilicon Technology (Shanghai) Co., Ltd.
Shanghai 201306 (CN)

(72) Inventors:
• CHEN, Zhongliang
Chengdu, Sichuan 610041 (CN)
• HE, Huali
Chengdu, Sichuan 610041 (CN)
• KONG, Xiaodong
Chengdu, Sichuan 610041 (CN)
• ZHOU, Lei
Chengdu, Sichuan 610041 (CN)
• YANG, Pingzhong
Chengdu, Sichuan 610041 (CN)

(74) Representative: Lapienis, Juozas
MSP Europe UAB
21-92 Seimyniskiu Str.
09236 Vilnius (LT)

(54) TONE MAPPING METHOD, APPARATUS, ELECTRONIC DEVICE AND STORAGE MEDIUM

(57) Provided in the present application are a tone mapping method, an apparatus, an electronic device and a storage medium. The method comprises: dividing an image into a plurality of sub-blocks, and acquiring a luminance histogram of each sub-block, the luminance histogram representing the frequency of pixels within the sub-block at different grayscale levels; acquiring a clipping threshold value corresponding to each sub-block, and correcting the luminance histogram of each sub-block according to the clipping threshold value corresponding to the sub-block, so as to generate a corrected histogram of each sub-block, wherein the frequency distribution across the different grayscale levels are equalized in the corrected histogram; solving a luminance mapping equation according to the luminance histogram and the corrected histogram of each sub-block, and establishing a luminance mapping relationship of each sub-block, the luminance mapping equation comprising a linear equation; and adjusting the image according to the luminance mapping relationship of each sub-block, so as to generate an adjusted image. Acquiring a clipping threshold value of each sub-block to perform equalization allows for more flexible adjustment of the local contrast, and using linear luminance mapping relationships ensures smoother transition between sub-blocks.

FIG. 1

**Description**

Technical Field

The present invention relates to the technology field of image processing, in particular to a tone mapping method, an apparatus (device), an electronic device, and a storage medium.

Background Art

Tone mapping is a widely used image adjustment method in the prior art, which enables images to be displayed more realistically on a monitor.

In the prior art, the method for tone mapping of images includes segmenting the image blocks in the image by category, determining mapping parameters based on the categories of all pixels within each image block, to obtain tone mapping curves for each image block, and finally applying tone mapping to the image blocks using the tone mapping curves. In such method, determining the final tone mapping curves through category segmentation results in a high computational complexity and a relatively large additional resource overhead. Additionally, the tone mapping relationships of neighboring pixels are generated through bilinear interpolation method, leading to poor smoothness in transition regions between neighborhoods.

Summary

In view of this, the objective of the present invention is to provide a tone mapping method, a device, an electronic device, and a storage medium to address the drawbacks of high computational complexity in the existing tone mapping methods mentioned above.

In the first aspect, the present invention provides a tone mapping method, wherein the method comprises dividing an image into multiple sub-blocks, and obtaining a luma histogram of each sub-block, wherein the luma histogram is a frequency of pixel points at different grayscale levels within the sub-block; obtaining a clipping threshold corresponding to each sub-block, correcting the luma histogram of each sub-block based on the clipping threshold corresponding to the sub-block, and generating a corrected histogram of each sub-block, wherein frequencies of different grayscale levels in the corrected histogram are evenly distributed; solving a luma mapping equation based on the luma histogram and corrected histogram of the sub-blocks, and building a luma mapping relationship for each sub-block, wherein the luma mapping equation comprises a linear equation; and adjusting the image based on the luma mapping relationship of each sub-block to generate an adjusted image.

In the above tone mapping method, the clipping threshold corresponding to each sub-block is obtained and the luma histogram of the sub-block is performed by equalization correction, thus making the adjustment of local contrast more flexible. Additionally, using a linear luma mapping relationship can enable smoother transitions between sub-blocks. Moreover, the tone mapping method in the present invention is simple and easy to implement, with low computational complexity, thus reducing resource overhead.

In one optional embodiment of the present invention, the method further comprises performing a content detection on the image to obtain the content weight of each pixel point; and building a luma histogram of the sub-block based on the luma value and the content weight of each pixel point within the sub-block.

In the above-mentioned embodiment, the content detection is performed, taking into account the impact effect of local high-frequency detail regions on contrast adjustment. This ensures that the contrast performance of the adjusted image is better in the high-frequency detail regions.

In one optional embodiment of the present invention, the step of performing a content detection on the image to obtain the content weight of each pixel point comprises applying a preset convolution kernel to convolve the corresponding pixel region of each pixel point, and obtaining a convolution value of each pixel point, wherein the convolution kernel is configured for the content detection; and querying a preset weight table based on the convolution value corresponding to each pixel point to obtain the content weight of each pixel point.

In the above-mentioned embodiment, during histogram statistics, each pixel point should be added with the content weight of the current pixel point. By introducing the content weights generated through the content detection, the contrast performance of the adjusted image in high-frequency detail regions will be enhanced.

In one optional embodiment of the present invention, the step of building a luma histogram of the sub-block based on the luma value and content weight of each pixel point within the sub-block comprises determining the grayscale level of each pixel point based on the luma value of the pixel point, wherein each grayscale level corresponds to at least one luma value; and building the luma histogram based on all grayscale levels within the sub-block and the pixel points corresponding to each grayscale level, wherein the frequency of each grayscale level in the luma histogram is a sum of the number of pixel points corresponding to the grayscale level and the content weight of all pixel points corresponding to the grayscale level.

In one optional embodiment of the present invention, the step of obtaining a clipping threshold corresponding to each sub-block comprises comparing an average luma of each sub-block with an average luma of the image to obtain a luma relationship of each sub-block; and adjusting a preset clipping value based on the luma relationship of each sub-block to obtain the clipping threshold corresponding to each sub-block.

In the above-mentioned embodiment, different clipping thresholds are set for the sub-blocks with varying luma levels. Setting different clipping thresholds for images that are lighter or darker can provide greater flexibility in adjusting local contrast.

In one optional embodiment of the present invention, the step of solving a luma mapping equation based on the luma histogram and corrected histogram of the sub-blocks, and building a luma mapping relationship for each sub-block comprises solving the luma mapping equation based on the luma histogram and corrected histogram of the sub-blocks, and building a first luma mapping relationship of each sub-block; obtaining a second luma mapping relationship of each sub-block in a previous-frame image of the image; and combining the first luma mapping relationship and the second luma mapping relationship of each sub-block to build a luma mapping relationship of each sub-block.

In the above-mentioned embodiment, the parameters of the linear equation for the luma mapping relationship are obtained by combining the parameters of the current frame and the previous frame. This helps to avoid significant differences in luma between the previous frame and the current frame, thus resulting in smoother transitions between the two frames of images.

In one optional embodiment of the present invention, the step of solving a luma mapping equation based on the luma histogram and corrected histogram of the sub-blocks, and building a luma mapping relationship for each sub-block comprises solving the luma mapping equation based on the luma histogram and corrected histogram of the sub-blocks, and building a first luma mapping relationship of each sub-block; obtaining a second luma mapping relationship of each sub-block in a previous-frame image of the image; obtaining a deviation relationship between the first luma mapping relationship and the second luma mapping relationship of each sub-block; and using, if there exists a deviation relationship of a sub-block greater than a deviation threshold, the second luma mapping relationship of the sub-block as the luma mapping relationship of the sub-block.

In the above embodiment, when comparing the two luma mapping relationships of a sub-block between the previous and subsequent frames of the images, if the deviation between the two luma mapping relationships is significant, the luma mapping relationship from the previous frame is selected as the luma mapping relationship for the current frame. This avoids significant differences in luma between the previous and subsequent frames of the images, thus ensuring smoother transitions between the previous and subsequent frames of the images.

In one optional embodiment of the present invention, the step of solving a luma mapping equation based on the luma histogram and corrected histogram of the sub-blocks, and building a luma mapping relationship for each sub-block comprises calculating a change in a probability density function of the corrected histogram of each sub-block relative to the luma histogram, to obtain a first mapping relationship; using the first mapping relationship to transform a luma value corresponding to each grayscale level in the luma histogram of the sub-block, to obtain multiple transformed values; solving the luma mapping equation based on the luma value corresponding to each grayscale level in the sub-block and the multiple transformed values, to obtain the first luma mapping relationship corresponding to each grayscale level; and generating a luma mapping relationship corresponding to each grayscale level based on the first luma mapping relationship corresponding to each grayscale level, wherein the luma mapping relationship of a sub-block is the luma mapping relationship of all grayscale levels within the sub-block.

In the above-mentioned embodiment, fitting the luma value and the transformed value of the grayscale level builds the luma mapping relationship of each grayscale level. Each grayscale level has its own luma mapping relationship, thus allowing for greater flexibility in adjusting local contrast.

In one optional embodiment of the present invention, the step of generating a luma mapping relationship corresponding to each grayscale level based on the first luma mapping relationship corresponding to each grayscale level comprises obtaining the second luma mapping relationship corresponding to each grayscale level of the sub-block in the previous-frame image of the image; and combining the first luma mapping relationship corresponding to each grayscale level with the second luma mapping relationship to generate the luma mapping relationship corresponding to each grayscale level.

In one optional embodiment of the present invention, the luma mapping equation, when it is a linear equation, comprises a slope and an intercept, and the step of adjusting the image based on the luma mapping relationship of each sub-block to generate an adjusted image comprises obtaining multiple reference sub-blocks of the sub-block, wherein the reference sub-blocks are adjacent sub-blocks of the sub-block; building, for any grayscale level within a sub-block, a first coordinate system, wherein a slope in the luma mapping relationship at the grayscale level of the sub-block and multiple reference sub-blocks corresponding to the sub-block is used as a third coordinate axis, and a length and a width are used as a first coordinate axis and a second coordinate axis respectively, and performing trilinear interpolation based on the first coordinate system to generate a first interpolation parameter; building, for any grayscale level within a sub-block, a second coordinate system, wherein an intercept in the luma mapping relationship at the grayscale level of the sub-block and multiple reference sub-blocks corresponding to the sub-block is used as a third coordinate axis, and a length and a width are used as a first coordinate axis and a second coordinate axis respectively, and performing trilinear interpolation based on the second coordinate system to generate a second interpolation parameter; building an interpolated luma mapping relationship of the grayscale levels based on the first interpolation parameter and the second interpolation parameters; and adjusting the sub-blocks and multiple reference sub-blocks corresponding to the sub-blocks based on the interpolated luma mapping relationship of each grayscale level within the sub-block, to generate the adjusted image.

In the above-mentioned embodiment, using a trilinear interpolation method to generate the mapping relationship of each grayscale level enables smoother transitions between image sub-blocks.

In one optional embodiment of the present invention, the luma mapping equation comprises Y=gain_a*X+ gain_b, where Y is the luma value of pixel points in the corrected histogram, X is the luma value of pixel points in the luma histogram, gain_a is a slope parameter of the luma mapping relationship, and gain_b is an intercept parameter of the luma mapping relationship.

In one optional embodiment of the present invention, the step of adjusting the image based on the luma mapping relationship of each sub-block to generate an adjusted image comprises obtaining a mapping sub-block and an interpolation sub-block from the image, wherein each pixel point in the mapping sub-block uses the luma mapping relationship of the sub-block to adjust the luma value, and each pixel point in the interpolation sub-block uses the interpolated luma mapping relationship to adjust luma value; obtaining multiple reference sub-blocks of the interpolation sub-block, wherein the reference sub-blocks are adjacent sub-blocks of the interpolation sub-block; building a first coordinate system, wherein gain_a in the luma mapping relationship of the interpolation sub-block and multiple reference sub-blocks corresponding to the interpolation sub-block is used as a third coordinate axis, and a length and a width are used as a first coordinate axis and a second coordinate axis respectively, and performing trilinear interpolation based on the first coordinate system to generate a first interpolation parameter; building a second coordinate system, wherein gain_b in the luma mapping relationship of the interpolation sub-block and multiple reference sub-blocks corresponding to the interpolation sub-block is used as a third axis, and a length and a width are used as a first coordinate axis and a second coordinate axis respectively, and performing trilinear interpolation based on the second coordinate system to generate a second interpolation parameter; building an interpolated luma mapping relationship of the interpolation sub-block based on the first interpolation parameter and the second interpolation parameters; and adjusting the luma value of the mapping sub-block in the image based on the luma mapping relationship, and adjusting the luma value of the pixel points in the interpolation sub-block in the image based on the interpolated luma mapping relationship, to generate the adjusted image.

In the above-mentioned embodiment, using a trilinear interpolation method to generate the mapping relationship of the interpolation sub-block enables smoother transitions between image sub-blocks.

In one optional embodiment of the present invention, the step of correcting the luma histogram of each sub-block based on the clipping threshold corresponding to the sub-block, and generating a corrected histogram of each sub-block comprises performing multiple iterations until a stop condition is met, wherein each iteration comprises identifying an adjustment level in the histogram of a current round, wherein the adjustment level is a grayscale level of which a frequency is greater than the clipping threshold; determining an allocation value of the current round based on the adjustment level and setting the frequency of each adjustment level to the clipping threshold; calculating an increasing value of each grayscale level by evenly distributing the allocation value of the current round to an intermediate histogram of the current round, wherein if a frequency of a grayscale level is less than the clipping threshold, the frequency of the grayscale level in the intermediate histogram of a new round is a sum of the increasing value and the frequency of the current round; and if a frequency of a grayscale level is the clipping threshold, the frequency of the grayscale level in the intermediate histogram of a new round is the clipping threshold; and generating an intermediate histogram of a new round based on the frequencies of each grayscale level in the intermediate histogram of the new round, wherein the intermediate histogram in a first round of iteration is the luma histogram, and the stop condition comprises the inability to evenly distribute the allocation value to adjust each grayscale level in a histogram, wherein the allocation value in the first round iteration is a sum of a frequency difference of all adjustment levels; and the frequency difference is the frequency difference between the frequency of each adjustment level in the intermediate histogram of the current round and the clipping threshold; and the allocation values of other rounds are a sum of a remaining total value and the frequency difference, wherein the remaining total value is a sum of all remaining values, and the remaining values are the increasing values that have not been added up.

In the above-mentioned embodiment, it is possible to achieve histogram equalization quickly and easily, and also reduce the occurrence of color layering or dark regions in the adjusted image.

In the second aspect, the present invention further provides a tone mapping device, wherein the device comprises a dividing module, configured for dividing an image into multiple sub-blocks, and obtaining a luma histogram of each sub-block, wherein the luma histogram is a frequency of pixel points at different grayscale levels within the sub-block; a correcting module, configured for obtaining a clipping threshold corresponding to each sub-block, correcting the luma histogram of each sub-block based on the clipping threshold corresponding to the sub-block, and generating a corrected histogram of each sub-block, wherein frequencies of different grayscale levels in the corrected histogram are evenly distributed; a building module, configured for solving a luma mapping equation based on the luma histogram and corrected histogram of the sub-blocks, and building a luma mapping relationship for each sub-block, wherein the luma mapping equation comprises a linear equation; and an adjusting module, configured for adjusting the image based on the luma mapping relationship of each sub-block to generate an adjusted image.

In a third aspect, the embodiments of the present invention provide an electronic device, comprising a processor and a memory, wherein the processor and the memory communicate with each other through a bus; and the memory stores program instructions that can be executed by the processor, wherein the processor invokes the program instructions to execute any of the methods described in the first aspect.

In a fourth aspect, the embodiments of the present invention provide an electronic device, comprising a memory and a processor, wherein the processor is connected to the memory; the memory is configured for storing programs, and the processor is configured for invoking the programs stored in the memory to execute any of the methods described in the first aspect.

In a fifth aspect, the embodiments of the present invention provide a computer-readable storage medium, wherein a computer program is stored therein, and when the computer program is executed by a processor, it executes any of the methods described in the first aspect.

Other features and advantages of the present invention will be elucidated in the subsequent summary. The objectives and other advantages of the present invention can be achieved and obtained through the structures particularly pointed out in the summary and the drawings.

Brief Description of Drawings

FIG. 1 is a flowchart of a tone mapping method provided by the embodiments of the present invention;

FIG. 2 is a schematic diagram of a division of a sub-block provided in the embodiments of the present invention;

FIG. 3 is a schematic diagram of a luma histogram provided in the embodiments of the present invention;

FIG. 4 is a schematic diagram of a weight table provided in the embodiments of the present invention;

FIG. 5 is a schematic diagram of a coordinate axis of a trilinear interpolation provided in the embodiments of the present invention;

FIG. 6 is a schematic block diagram of a tone mapping device provided in the embodiments of the present invention; and

FIG. 7 is a schematic block diagram of an electronic device provided by the embodiments of the present invention.

Detailed Description of Embodiments

In the following, the embodiments of the present invention are described in detail with reference to the drawings. It should be noted that although the same elements are shown in different drawings, they will be indicated by the same reference marks. In the following description, specific details such as detailed configurations and components are provided to aid only in a full understanding of the embodiments of the present invention. Thus, it should be clear to those skilled in the art that various changes and modifications to the embodiments described herein may be made without departing from the scope of the present invention. In addition, descriptions of well-known functions and constructions are omitted for clarity and brevity. The terms described below are defined terms in view of the functions in the present invention and may vary according to the user, the intent, or the custom of the user. Accordingly, the definitions of terms should be determined based on the content throughout the summary.

The present invention may have various modifications and various embodiments. In the present invention, embodiments are described in detail below with reference to the drawings. It should be understood, however, that the present invention is not limited to embodiments, but includes all modifications, equivalents, and alternatives within the scope of the present invention.

The terms used herein are used only to describe various embodiments of the present invention and are not intended to limit the present invention. The singular form is intended to include the plural form unless the context clearly indicates otherwise. In the present invention, it should be understood that the terms "comprise" or "include" indicate the presence of features, quantities, steps, operations, structural components, parts, or their combinations, and do not exclude the presence of one or more other features, quantities, steps, operations, structural components, parts, or their combinations; or the possibility of adding one or more other features, quantities, steps, operations, structural components, parts, or their combinations.

All terms used herein have the same meaning as understood by those skilled in the art to which the present invention belongs unless defined differently. Unless explicitly defined in the present invention, terms (such as those defined in a general dictionary) should be interpreted with the same meaning as they have in the relevant field of context, and should not be interpreted with an idealized or overly formalized meaning.

An electronic device according to one embodiment can be one type of electronic device among various types. Electronic devices may include, for example, portable communication devices (such as smartphones), computers, portable multimedia devices, portable medical devices, cameras, wearable devices, or household appliances. According to one disclosed embodiment, the electronic devices are not limited to the examples mentioned above.

The terms used in the present invention are not intended to limit the present invention but to encompass various changes, equivalents, or substitutions of corresponding embodiments. Regarding the description of the drawings, similar reference numerals may be used to indicate similar or related elements. Unless otherwise indicated in the relevant context, the singular form of nouns corresponding to items may include one or more of the items. As used herein, phrases such as "A or B", "at least one of A and B", "at least one of A or B", "A, B, or C", "at least one of A, B, and C", and "at least one of A, B, or C" each may include any possible combination of the respective items listed together in the phrase. Terms such as "1st", "2nd", "first", and "second" used herein are used to distinguish one component from another and are not intended to limit the components in other respects (e.g., in terms of importance or sequence). It is intended that if a component (e.g., the first component) is referred to be "coupled with", or "combined with" to another component (e.g., the second component) or "connected with", or "connected to" another component (e.g., the second component), with or without the terms "operatively" or "communicatively", the component can be directly (e.g., wired), wirelessly, or via a third component, combined with the other component.

As used herein, the term "module" may include units implemented in hardware, software, or firmware, and may be used interchangeably with other terms such as "logic", "logic block", "component", and "circuit". Modules can be single integrated components or their smallest units or parts suitable for performing one or more functions. For example, according to one embodiment, modules can be implemented in the form of application-specific integrated circuits (ASICs).

For ease of understanding, relevant terms and concepts related to the embodiments of the present invention will first be introduced.

Tone mapping originates from a term in photography. Since the luma range that can be displayed in printed photos is insufficient to represent the luma range in the real world, and if the entire luma range of the real world is simply linearly compressed into the luma range that the photo can represent, a lot of detail will be lost at both ends of the luma spectrum simultaneously, which is clearly not the desired effect. To overcome this situation, the method of tone mapping is introduced.

In computer graphics, the concept of tone mapping is further expanded to ensure that images are displayed more realistically on a monitor. The overall process can be described as follows. In the first, an average luma of the scene is estimated based on the current scene. Then, an appropriate luma range is selected based on the average luma, and the image is mapped to the luma range to obtain a result that matches the scene. For example, in some scenes, vibrant color images are generated. For another example, images with as much detail as possible or maximum image contrast in part of the scene are generated.

The current tone mapping methods in the prior art have drawbacks such as high computational complexity and additional overhead of resources.

Based on the technical problems in the prior art, the present invention provides a tone mapping method. The clipping threshold corresponding to each sub-block is obtained and the luma histogram of the sub-block is performed by equalization correction, thus making the adjustment of local contrast more flexible. Additionally, using a linear luma mapping relationship can enable smoother transitions between sub-blocks. Moreover, the tone mapping method in the present invention is simple and easy to implement, with low computational complexity, thus reducing resource overhead.

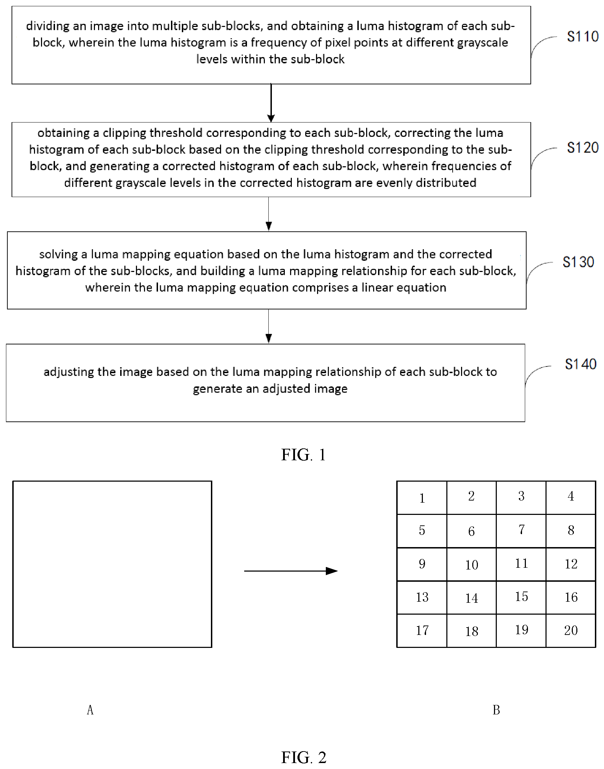

As shown in FIG. 1, FIG. 1 is a flowchart of a tone mapping method illustrated by the embodiments of the present invention. As shown in FIG. 1, the method comprises steps S110 to S140.

S110: dividing an image into multiple sub-blocks, and obtaining a luma histogram of each sub-block, wherein the luma histogram is a frequency of pixel points at different grayscale levels within the sub-block.

The image awaiting tone mapping processing is obtained and the image is divided into multiple sub-blocks. For example, as shown in FIG. 2, FIG. 2 is a schematic diagram of a division of a sub-block illustrated by the embodiments of the present invention. Image A shown in FIG. 2 is an image awaiting tone mapping processing. The image is divided into $4\times5$ sub-blocks. The divided sub-blocks are illustrated in image B of FIG. 2. The division of sub-blocks in the present invention can be adjusted according to requirements. The division of sub-blocks illustrated in FIG. 2 is just one example and does not limit the scope of the present invention. For example, the image A can be divided into $3\times3$ sub-blocks.

For each sub-block, the luma histogram is obtained. The histogram is a type of chart widely used in statistics. It visually presents statistical data and can show how many data points fall within a given numerical interval. The given numerical intervals are referred to as "class" or "bin (or bucket)", and the frequency of data corresponding to each class is indicated by a rectangular bar of a certain height. Luma represents the luma of pixels in an image. Luma is the degree of lightness or darkness of pixels in an image, regardless of color information. In some contexts, since luma refers to the difference between the luma and darkness of a displayed pixel point, it is also known as grayscale. The range of luma value typically spans from 0 to 255, with white represented as 255 and black as 0.

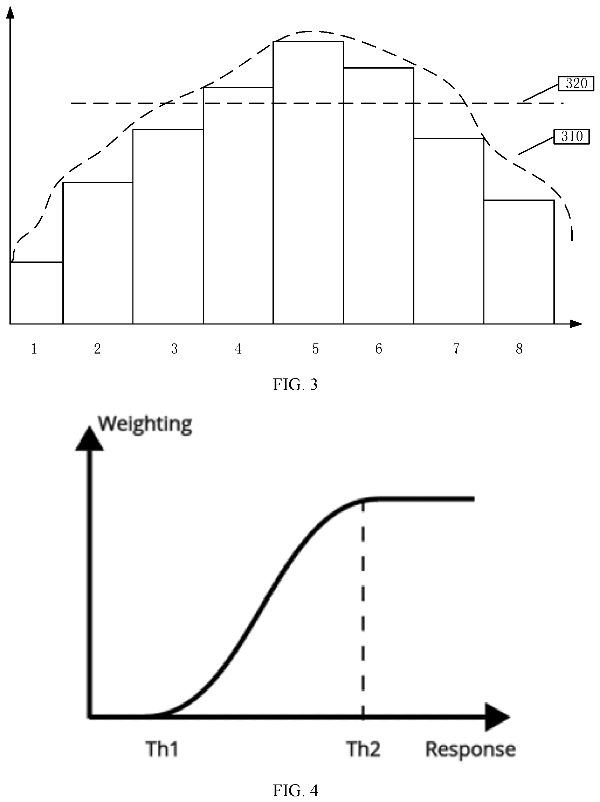

In the luma histogram of the embodiments of the present invention, a numerical interval of a class is a numerical interval of a luma value. For clarity, in this application, a class in the luma histogram is referred to as a grayscale level, and the frequency of each class is the number of pixel points within the class interval in the sub-block. Exemplarily, as shown in FIG. 3, FIG. 3 is a schematic diagram of a luma histogram illustrated by the embodiments of the present invention. The luma histogram shown in FIG. 3 is the luma histogram of sub-block 1 from image B shown in FIG. 2. In FIG. 3, the horizontal axis is the luma value, and the vertical axis is the frequency. By setting 8 grayscale levels in FIG. 3, the luma values in FIG. 3 are divided into 8 intervals, namely 0-31, 32-63, 64-95, 96-127, 128-159, 160-191, 192-223, and 224-255. Therefore, the numerical interval for grayscale level 1 is 0-31, and the frequency of the grayscale level can be the number of pixel points in sub-block 1 with luma values falling within the range of 0-31. In the present invention, the numerical interval corresponding to the grayscale levels can be freely adjusted according to requirements. For example, the numerical intervals can be respectively set as 0-120, 121-200, and 201-255, or each grayscale level can be assigned a unique luma value.

It should be noted that in the present invention, the image includes a luma channel or similar features. Exemplarily, the image can be in the YUV encoding format, wherein the YUV image includes the Y channel for luma. Alternatively, when the image is in the RGB encoding format, it can be converted to a YUV image; or, the grayscale image from the RGB image is obtained and the grayscale image will be configured to build sub-block and histogram.

In one embodiment of the present invention, the method further comprises performing a content detection on the image to obtain the content weight of each pixel point; and building a luma histogram of the sub-block based on luma value and content weight of each pixel point within the sub-block.

In the image, different pixel points have varying levels of importance. If each pixel point is equally counted as 1 during frequency statistics, the differences between different pixel points are neglected. For example, in a sub-block including a human face, two pixel points, A and B, are assumed, wherein pixel point A belongs to the face and pixel point B belongs to the background. When determining that the luma value of pixel point A belongs to the first grayscale level, the frequency of the first grayscale level is incremented by 1. Similarly, when determining that the luma value of pixel point B belongs to the first grayscale level, the frequency of the first grayscale level is also incremented by 1. Clearly, both pixel points are counted as 1. The importance of the pixel points representing the human face is neglected, thus resulting in poor performance of the image after tone mapping.

In the embodiment, different pixel points are counted as different values during frequency statistics so as to highlight the importance of different pixels.

Before histogram statistics, the content detection is first performed on the image. The content detection refers to the detection of features related to the image content, and the image content detection can involve multiple features. The selection of specific features depends on the application scenario. Common features used in the image content detection include color features, texture features, shape features, edge features, structural features, contextual features, etc. The features can represent the content of the image. For example, color features are obtained by analyzing the color distribution in the image. With color features, different objects with distinct colors, such as a red car or a blue sky, can be identified. Another example is texture features, which describe the texture patterns in different regions of the image. Texture features enable the recognition of different objects in the image, such as grass or brick walls. Based on the detection results, a weight parameter of each pixel point is obtained. In the present invention, the weight is referred to as the content weight.

Exemplarily, an artificial intelligence model can be used to detect the performance level of high-frequency details in the sub-blocks. Based on the performance level, the content weight of each pixel point can be outputted. In the embodiment, the pixels in regions with higher frequency details should be assigned higher content weights.

In the embodiment where content detection is performed, for building the luma histogram of each sub-block, the frequency statistics can be conducted by combining the luma value and the content weight of each pixel point, thus assigning different statistical values to each pixel point. Exemplarily, when building the luma histogram, if a pixel point is determined to belong to a grayscale level, the actual statistical value attributed to the pixel point is calculated as the content weight multiplied by a base quantity, where the base quantity can represent the number of the pixel point, etc. For instance, presumptively, a pixel point has a luma value of 30 and a content weight of 2, and the number of the pixel point is 1. If it is determined that the luma value of the pixel point falls within the numerical range of the first grayscale level in FIG. 3 (where the numerical interval for the first grayscale level is 0-31), then the pixel point belongs to the first grayscale level. Presumptively, the frequency at this point within the first grayscale level is Cnt. Therefore, the statistical value of the pixel point that should be calculated is: $2 \times 1 = 2$. Therefore, after the statistics, the frequency of the pixel point in the first grayscale level is Cnt+2.

In the above-mentioned embodiment, the content detection is performed, taking into account the impact effect of local high-frequency detail regions on contrast adjustment. This ensures that the contrast performance of the adjusted image is better in the high-frequency detail regions.

In one embodiment of the present invention, the step of performing a content detection on the image to obtain the content weight of each pixel point comprises applying a preset convolution kernel to convolve the corresponding pixel region of each pixel point, and obtaining a convolution value of each pixel point, wherein the convolution kernel is configured for the content detection; and querying a preset weight table based on the convolution value corresponding to each pixel point to obtain the content weight of each pixel point.

In some embodiments of the present invention, the building of the content detection and the histogram can be the following:

using a preset convolution kernel to convolve a pixel region corresponding to each pixel point in the image, wherein the pixel region is a preset representation region of one pixel. Exemplarily, a $3\times3$ region centered on the pixel point is set as the pixel region. For a pixel point, convolving the region with the preset convolution kernel obtains the convolution value of the pixel point. The convolution kernel is preset and configured for content detection, for example, a convolution kernel capable of detecting edges can be set.

After convolving the pixel region corresponding to each pixel point, the convolution value of each pixel point can be obtained.

For each pixel point, a preset weight table is queried based on the convolution value of the pixel point to obtain the content weight of the pixel point. The weight table is a pre-built corresponding relationship. Exemplarily, the relationship between the convolution value and the content weight is a one-dimensional table, wherein the correspondence curve between the convolution value and the content weight in the one-dimensional table is shown in FIG. 4. FIG. 4 is a schematic diagram illustrating a weight table in the embodiments of the present invention. The curve shown in FIG. 4 builds the relationship between high-frequency details and content weights, which is then applied in subsequent histogram statistics. Based on the content weight, histogram statistics should not only consider the grayscale level luma of the current point but also the weight that contributes to the details.

In FIG. 4, the horizontal axis "Response" represents the convolution value of the current point after convolution, and the vertical axis "weight" represents the content weight. Assuming a pixel point is convolved to get a convolution value Re, the curve depicted in FIG. 4 can be interpreted as follows:

if (Re <= Th1), weight = 0; if the convolution value of the pixel point is less than the preset first threshold Th1, then the content weight of the pixel point is 0;

if (Re >= Th2), weight= wgt_max, where wgt_max is a customizable parameter, typically set between 5 and 10; if the convolution value of the pixel point is greater than or equal to the preset second threshold Th2, then the content weight of the pixel point is wgt_max;

if (Th1<Re<Th2), $\text{weight} = (\text{Re} - \text{Th1}) * \frac{\text{wgt\_max}}{\text{Th2}-\text{Th1}}$ ; if the convolution value of the pixel point is greater than the preset first threshold Th1 and less than the preset second threshold Th2, then the content weight of the pixel point is obtained by calculating the formula: $(\text{Re} - \text{Th1}) * \frac{\text{wgt\_max}}{\text{Th2}-\text{Th1}}$ .

The content weight of each pixel point can be obtained by looking up the table.

In one embodiment of the present invention, the step of building a luma histogram of the sub-block based on luma value and content weight of each pixel point within the sub-block comprises determining the grayscale level of each pixel point based on the luma value of the pixel point, wherein each grayscale level corresponds to at least one luma value; and building the luma histogram based on all grayscale levels within the sub-block and the pixel points corresponding to each grayscale level, wherein the frequency of each grayscale level in the luma histogram is a sum of the number of pixel points corresponding to the grayscale level and the content weight of all pixel points corresponding to the grayscale level.

After obtaining the content weight, the luma histogram is built based on the content weight and the luma value of each pixel point. In the process of building the luma histogram, the method of counting the frequency of grayscale levels is as follows: determining, for any pixel point, firstly, the numerical interval corresponding to the luma value of the pixel point; determining, based on the numerical interval corresponding to the luma value, the grayscale level to which the pixel point corresponds; and adding 1 and the content weight of the pixel point to the existing frequency of the grayscale level. For example, the current sub-block is sub-block 1 of the image in B shown in FIG. 2, and sub-block 1 is set with 8 grayscale levels. A pixel point has a luma value of 56 and a content weight of 7. For the pixel point, firstly, it is determined that the luma value of the pixel point lies within the numerical interval of the second grayscale level (the numerical interval of the second grayscale level is 32-63). Hypothetically, the number of frequencies that have been counted within the second grayscale level is Cnt, at which point the value that should be counted for the second grayscale level is the number of the pixel point 1 plus the content weight of 7. The number of frequencies in the second grayscale level after statistics the number of frequencies of the pixel point is Cnt+1+7. All pixel points within a sub-block are counted to build up a luma histogram of the sub-block. By the statistical method described above, the frequency with which each grayscale level in the figure is counted is the sum of the number of pixel points corresponding to the numerical intervals of the grayscale level within the sub-block and the content weights of the pixel points. It should be understood that the methods of generating the frequency using the content weights in the above embodiments of the present invention are only examples, and the present invention does not limit the specific methods of generating the frequency using the content weights.

In the above-mentioned embodiment, during histogram statistics, each pixel point should be added with the content weight of the current pixel point. By introducing the content weights generated through the content detection, the contrast performance of the adjusted image in high-frequency detail regions will be enhanced.

S120: obtaining a clipping threshold corresponding to each sub-block, correcting the luma histogram of each sub-block based on the clipping threshold corresponding to the sub-block, and generating a corrected histogram of each sub-block, wherein frequencies of different grayscale levels in the corrected histogram are evenly distributed.

In the step of obtaining a clipping threshold corresponding to each sub-block, each sub-block has different luma levels, so each sub-block is set with different clipping thresholds, which allows different contrast adjustment methods for different sub-blocks. Consequently, this leads to the resulting adjusted images with higher contrast performance. Exemplarily, different grayscale level proportions in each sub-block can be directly calculated. The grayscale level proportions represent the luma level of the sub-block. The clipping threshold of the sub-block is set based on the proportion results.

The luma histogram of each sub-block is corrected based on the clipping threshold, thus generating a corrected histogram of each sub-block. The frequencies of different grayscale levels in the obtained corrected histogram are evenly distributed. Exemplarily, based on the histogram shown in FIG. 3, a distribution curve 310 of the pixel point of sub-block 1 in luma can be calculated. According to the curve, it can be observed that there are many high-luma pixel points in the sub-block and fewer low-luma pixel points. The distribution is uneven, hence resulting in poor display performance for the sub-block. Therefore, it is necessary to correct the histogram to achieve a balanced distribution of pixel points with different luma. Exemplarily, the clipping threshold of sub-block 1 is shown as 320 in FIG. 3. In the distribution curve, the peak portion of the distribution curve above the clipping threshold can be cropped. After cropping the peak portion, it can be observed that the frequencies of each grayscale level on the distribution curve are quite similar. Alternatively, the peak portion of the distribution curve above the clipping threshold in the distribution curve is obtained, and then the obtained peak portion is equally distributed to other grayscale levels. After distribution, the frequencies of each grayscale level are quite similar.

In one embodiment of the present invention, the step of obtaining a clipping threshold corresponding to each sub-block comprises comparing an average luma of each sub-block with an average luma of the image to obtain a luma relationship of each sub-block; and adjusting a preset clipping value based on the luma relationship of each sub-block to obtain the clipping threshold corresponding to each sub-block.

The method of comparing the average luma of each sub-block with the entire image is used to determine the luma level of the sub-block, and the average luma of each sub-block and the image are obtained. The average luma can be calculated as:

$$\text{gridMean} = \frac{\text{statLumaSum}}{\text{statPixelTotal}},$$

where statLumaSum is the sum of the luma values of the pixel points counted in the statistics, statPixelTotal is the total number of pixel points counted in the statistics, and gridMean is the average luma.

For a sub-block, by comparing the average luma of the sub-block with the average luma of the image, a luma relationship of the sub-block can be obtained. The luma relationship indicates the luma level of the sub-block. Exemplarily, assuming the average luma of sub-block 1 in FIG. 2 is 100 and the average luma of image A in FIG. 2 is 200, based on the result of comparison between the two, i.e., 100<200, the luma relationship of sub-block 1 can be obtained, i.e., sub-block 1 is darker.

The preset clipping values are adjusted based on the obtained luma relationship, thereby obtaining a clipping threshold corresponding to each sub-block. Exemplarily, the clipping threshold is set to 120, and the luma relationship of sub-block 1 represents that the average luma of the sub-block is less than the average luma of the image. If the current sub-block is relatively dark, the preset clipping value can be adjusted upwards, for instance, by increasing it to 130, and then 130 is the clipping threshold of sub-block 1. Therefore, the clipping threshold of the darker sub-blocks is higher than the clipping threshold of the brighter sub-blocks. Correspondingly, when the average luma of a sub-block is greater than the average luma of the entire image, it is considered relatively brighter. Therefore, the clipping threshold of the sub-block should be lowered to ensure that the clipping threshold of the sub-block is one level lower than the preset clipping threshold. The magnitude of adjusting the clipping threshold to be higher or lower can be set according to the specific requirements.

In the above-mentioned embodiment, different clipping thresholds are set for the sub-blocks with varying luma levels. Setting different clipping thresholds for images that are lighter or darker can provide greater flexibility in adjusting local contrast.

In one embodiment of the present invention, the step of correcting the luma histogram of each sub-block based on the clipping threshold corresponding to the sub-block, and generating a corrected histogram of each sub-block comprises performing multiple iterations until a stop condition is met, wherein each iteration comprises identifying an adjustment level in the histogram of a current round, wherein the adjustment level is a grayscale level of which a frequency is greater than the clipping threshold; determining an allocation value of the current round based on the adjustment level and setting the frequency of each adjustment level to the clipping threshold; calculating an increasing value of each grayscale level in an intermediate histogram of the current round by evenly distributing the allocation value of the current round, wherein if a frequency of a grayscale level is less than the clipping threshold, the frequency of the grayscale level in the intermediate histogram of a new round is a sum of the increasing value and the frequency of the current round; and if a frequency of a grayscale level is the clipping threshold, the frequency of the grayscale level in the intermediate histogram of a new round is the clipping threshold; and generating an intermediate histogram of a new round based on the frequencies of each grayscale level in the intermediate histogram of the new round, wherein the intermediate histogram in a first round of iteration is the luma histogram, and the stop condition comprises the inability to evenly distribute the allocation value to each grayscale level in an adjustment histogram, wherein the allocation value in the first round iteration is a sum of a frequency difference of all adjustment levels; and the frequency difference is the frequency difference between the frequency of each adjustment level in the intermediate histogram of the current round and the clipping threshold; and the allocation values of other rounds are a sum of a remaining total value and the frequency difference, wherein the remaining total value is a sum of all remaining values, and the remaining values are the increasing values that have not been added up.

The multiple iterations are performed until the preset iteration stop condition is met, then the iteration is stopped;

in each round of iteration, the process includes:

firstly, summing up the number of points exceeding the clipping threshold in the current round:

$$\text{Sum}_{\text{ex}} = \sum_{\text{hist}[p]>clipTh} (\text{hist}[p] - \text{clipTh})$$

where $\text{Sum}_{\text{ex}}$ represents the number of pixel points that exceed the clipping threshold, clipTh is the clipping threshold, P is the grayscale level, and hist[p] represents the number of pixel points within a grayscale level.

Specifically, the adjustment level of the intermediate histogram is obtained for the current round, wherein the adjustment level is the grayscale levels with frequencies greater than the clipping threshold. Exemplarily, in the luma histogram shown in FIG. 3, for the clipping threshold of 320, the adjustment level includes 4, 5, and 6. The frequencies of the three grayscale levels are all greater than the clipping threshold of 320.

Based on the searched adjustment level, the allocation value of the current round is obtained. In the first round of iteration, the allocation value is, in the intermediate histogram of the current round, the portion of the distribution curve that is greater than the clipping threshold. The intermediate histogram of the first round is the luma histogram obtained from the statistics. Exemplarily, in the luma histogram shown in FIG. 3, for the first round of iteration, the difference values between adjustment levels of 4, 5, and 6, and the clipping threshold of 320 are calculated, respectively. For instance, the difference values between adjustment levels 4, 5, and 6, and the clipping threshold are calculated to obtain the differences of 50, 60, and 50, respectively. The difference values are the frequency differences for each adjustment level. The sum of the frequency differences of the adjustment levels is calculated, i.e., 50+60+50=160. After obtaining the allocation value, the frequency of each adjustment level is set as the clipping threshold. That is to say, the adjustment levels are 4, 5, and 6. The frequencies of all three grayscale levels are set as the clipping thresholds.

Subsequently, the exceeding portion is distributed equally to each grayscale level. After the first allocation, hist[p] can be expressed as:

$$\text{hist}[p] = \begin{cases} \text{clipTh} & \text{if}(\text{hist}[p] + \text{aveVal} \geq \text{clipTh}) \\ \text{hist}[p] + \text{aveVal} & \text{if}(\text{hist}[p] + \text{aveVal} < \text{clipTh}) \end{cases},$$

where aveVal is the number allocated equally to each grayscale level, $aveVal = \dfrac{Sum_{ex}}{grayLevel}$, and Res is set as the remaining number of individuals that have not been allocated. The allocation step is repeated to continue distributing Res until it is fully allocated.

Specifically, the number of allocating the allocation value to each grayscale level (i.e., the increasing value of each grayscale level) is calculated, where the value is 160/8=20. For each grayscale level, first, it is determined whether the frequency of the grayscale level is greater than the clipping threshold. If it is less than the clipping threshold, the current frequency of the grayscale level is obtained and the sum of the frequency and the increasing value is calculated. The sum of the two is used as the frequency in the intermediate histogram of the next round for the grayscale level. For example, if a frequency of 80 of grayscale level 3 is less than the clipping threshold of 110, then 100+20=130, and 130 is the frequency in the intermediate histogram of the next round for the grayscale level.

If it is equal to the clipping threshold, the frequency is maintained. That is to say, the clipping threshold is used as the frequency in the intermediate histogram of the next round for the grayscale level. For example, if the frequency of grayscale level 4 has been set to the clipping threshold of 110, the frequency of the round of the grayscale level remains unchanged.

An intermediate histogram of a new round is generated based on the frequency of determined each grayscale level in the intermediate histogram of the new round. For example, the frequency of grayscale level 3 is set to 130 and the frequency of grayscale level 4 remains unchanged. A new round of the intermediate histogram is generated based on the luma histogram.

In subsequent iterations, the steps are the same as in the first round of iterations. The difference is only in the acquisition of the allocation value, where the allocation value in other rounds except the first iteration is the sum of the remaining total value and the frequency difference.

Exemplarily, for the second round of iterations, the intermediate histogram of the round of iterations is obtained, and the adjustment level in the histogram of the current round is inquired. For example, the frequency of the grayscale level 3 is 130, which is greater than the clipping threshold of 110, and is the adjustment level. The difference between the frequency of grayscale level 3 and the clipping threshold is calculated by obtaining the allocation value of the current round based on the adjustment level. The frequency difference of 20 is obtained. Since grayscale levels 4, 5, and 6 do not receive any increasing values in the first round of allocations, there are 3 increasing values that are not added. For ease of differentiation, the values that are not added are referred to as remaining values, and the 3 remaining values are summed to obtain a remaining total value of 60. In other words, the allocation value is 60+20=80 in the second round of iteration. The frequency of grayscale level 3 is set to 110.

The increasing value distributing the allocation value to each grayscale level is calculated, which is 80/8=10. For each grayscale level, it is first determined whether the frequency of the grayscale level is greater than the clipping threshold. If it is less than the clipping threshold, the current frequency of the grayscale level is obtained and the sum of the frequency and the increasing value is calculated. The sum of the two is used as the frequency in the intermediate histogram of the next round for the grayscale level. If it is equal to the clipping threshold, the frequency is maintained. That is to say, the clipping threshold is used as the frequency in the intermediate histogram of the next round for the grayscale level. According to the intermediate histogram of the current round, an intermediate histogram of a new round is generated based on the frequency of determined each grayscale level in the intermediate histogram of the new round.

The iteration is repeated until the stop condition is satisfied. The stop condition includes the inability to evenly distribute the allocation value to each grayscale level in the adjustment histogram. For example, the frequencies of all grayscale levels are the clipping threshold. For another example, there are no grayscale levels that can be less than the clipping threshold after receiving the increasing value of a new round. Or, the allocation value cannot be evenly distributed. For instance, when the allocation value is 4, 4/8 does not allow for an exact division, and equal distribution is also not possible at this point.

When the iteration stops, the intermediate histogram of the round of iterations is the corrected histogram.

In the above-mentioned embodiment, it is possible to achieve histogram equalization quickly and easily, and also reduce the occurrence of color layering or dark regions in the adjusted image.

S130: solving the luma mapping equation based on the luma histogram and corrected histogram of the sub-blocks, and building a luma mapping relationship of each sub-block.

For each sub-block, the luma mapping relationship of the sub-block is built based on the transformation relationship between the luma histogram and the corrected histogram of the sub-block. For example, in comparison to the corrected histogram, the luma values of the pixel point within the sub-block in the luma histogram are altered. The distribution of luma after modification of the pixel point is represented by the corrected histogram. Therefore, the luma mapping equation can be solved using the distribution change relationship between the two, thereby identifying the change relationship of the luma of the sub-block. The luma change relationship is the luma mapping relationship. The luma mapping equation solved in one embodiment of the present invention is a linear equation. In another embodiment, the luma mapping equation is nonlinear, such as a logarithmic function, etc. The present invention does not impose any restrictions on the form of the luma mapping equation.

In one embodiment of the present invention, the luma mapping equation is $Y = gain\_a * X + gain\_b$, where $Y$ is the luma value of pixel points in the corrected histogram, $X$ is the luma value of pixel points in the luma histogram, $gain\_a$ is a slope parameter of the luma mapping relationship, and $gain\_b$ is an intercept parameter of the luma mapping relationship.

Equalization correction of the histogram is performed for obtaining the corrected histogram. The specific $gain\_a$ and $gain\_b$ are solved by solving the linear luma mapping equation $Y = gain\_a * X + gain\_b$, based on the grayscale levels before and after correction in the two images. Based on the solved $gain\_a$ and $gain\_b$, the luma mapping relationship of the sub-block can be built.

In one embodiment of the present invention, the step of solving a luma mapping equation based on the luma histogram and corrected histogram of the sub-blocks, and building a luma mapping relationship for each sub-block comprises solving the luma mapping equation based on the luma histogram and corrected histogram of the sub-blocks, and building a first luma mapping relationship of each sub-block; obtaining a second luma mapping relationship of each sub-block in a previous-frame image of the image; and combining the first luma mapping relationship and the second luma mapping relationship of each sub-block to build a luma mapping relationship of each sub-block.

For each sub-block of the image, the luma mapping equation is solved based on the transformation of the luma histogram and the corrected histogram of the sub-block, thus building the luma mapping relationship of the sub-block.

After building the luma mapping relationship of each sub-block in the image, the luma mapping relationship of each sub-block in the previous-frame image of the image is obtained, wherein the sub-block in the previous-frame image of the image corresponds one-to-one with the sub-block in the current image.

For ease of differentiation, for each sub-block, its luma mapping relationship in the current image is referred to as a first luma mapping relationship; and its luma mapping relationship in the previous frame of the image is referred to as a second luma mapping relationship.

For each sub-block, the first luma mapping relationship and the second luma mapping relationship thereof are combined. For example, the first luma mapping relationship and the second luma mapping relationship are combined using a weighted approach.

For example, $gain\_a = (w1 * gain\_a\_frm1) + ((1 - w1) * gain\_a\_frm2)$, where $gain\_a\_frm1$ is the $gain\_a$ of the previous-frame image; $gain\_a\_frm2$ is the $gain\_a$ of the current-frame image, and $w1$ is a preset weight parameter.

The combining of $gain\_b$ can be done in the same way: $gain\_b = (w2 * gain\_b\_frm1) + ((1 - w2) * gain\_b\_frm2)$, where $gain\_b\_frm1$ is the $gain\_b$ of the previous-frame image; $gain\_b\_frm2$ is the $gain\_b$ of the current-frame image, and $w2$ is a preset weight parameter.

In the above-mentioned embodiment, the parameters of the linear equation for the luma mapping relationship are obtained by combining the parameters of the current frame and the previous frame. This helps to avoid significant differences in luma between the previous frame and the current frame, thus resulting in smoother transitions between the two frames of images.

In one embodiment of the present invention, the step of solving a luma mapping equation based on the luma histogram and corrected histogram of the sub-blocks, and building a luma mapping relationship for each sub-block comprises solving the luma mapping equation based on the luma histogram and corrected histogram of the sub-blocks, and building a first luma mapping relationship of each sub-block; obtaining a second luma mapping relationship of each sub-block in a previous-frame image of the image; obtaining a deviation relationship between the first luma mapping relationship and the second luma mapping relationship of each sub-block; and using, if there exists a deviation relationship of a sub-block greater than a deviation threshold, the second luma mapping relationship of the sub-block as the luma mapping relationship of the sub-block.

For each sub-block of the image, the luma mapping relationship of the sub-block is built based on the transformation of the luma histogram and the corrected histogram of the sub-block. For ease of distinction, the present invention refers to the mapping relationship as the first luma mapping relationship.

After obtaining the first luma mapping relationship, a luma mapping relationship is obtained for each sub-block of the previous-frame image of the current-frame image, and the sub-blocks in the previous-frame image correspond one-to-one with the sub-blocks in the current-frame image. For ease of distinction, the luma mapping relationship of the sub-block in the previous-frame image is referred to as the second luma mapping relationship in the embodiments of the present invention.

For each sub-block, a deviation relationship between the first luma mapping relationship and the second luma mapping relationship of the sub-block is obtained. Exemplarily, for each sub-block, the difference values of $gain\_a$ and $gain\_b$ between the first luma mapping relationship and the second luma mapping relationship is calculated. Hypothetically, $gain\_a\_frm1$ in the first luma mapping relationship is 5, and $gain\_a\_frm2$ in the second luma mapping relationship is 8, so the difference value between the two is 3; and $gain\_b\_frm1$ in the first luma mapping relationship is 2, and $gain\_b\_frm2$ in the second luma mapping relationship is 6, so the difference value between the two is 4. The sum of the two difference values is 7, and the value is a deviation relationship between the first luma mapping relationship and the second luma mapping relationship.

The value is greater than a preset threshold value of 5, which indicates that the deviation relationship of the sub-block is greater than the deviation threshold. Therefore, the second luma mapping relationship of the sub-block is regarded as the luma mapping relationship of the sub-block. In other words, the luma mapping relationship is built by taking gain_a to be 8 and gain_b to be 6.

The above deviation relationship is only used as an example, and it can also be in other forms. For example, the deviation relationship is the difference value of gain_a and the difference value of gain_b, respectively. The present invention does not limit the form of the deviation relationship.

In the above embodiment, when comparing the two luma mapping relationships of a sub-block between the previous and subsequent frames of the images, if the deviation between the two luma mapping relationships is significant, the luma mapping relationship from the previous-frame image is selected as the luma mapping relationship for the current-frame image. This avoids significant differences in luma between the previous and subsequent frames of the images, thus ensuring smoother transitions between the previous and subsequent frames of the image.

S140: adjusting the image based on the luma mapping relationship of each sub-block to generate an adjusted image.

After obtaining the luma mapping relationship of each sub-block, for each sub-block, the luma value of the pixel point within the sub-block is adjusted based on the luma mapping relationship of the sub-block. Exemplarily, for sub-block 1, each pixel point within the sub-block is used to calculate its luma value after calculated by the luma mapping relationship, and the luma value of each pixel point is set as the calculated luma value.

After all the sub-blocks have been modified, the adjusted image can be obtained by stitching all the sub-blocks together.

The step of adjusting the image based on the luma mapping relationship of each sub-block to generate an adjusted image comprises obtaining a mapping sub-block and an interpolation sub-block from the image, wherein each pixel point in the mapping sub-block uses the luma mapping relationship of the sub-block to adjust the luma value, and each pixel point in the interpolation sub-block uses the interpolated luma mapping relationship to adjust luma value; obtaining multiple reference sub-blocks of the interpolation sub-block, wherein the reference sub-blocks are adjacent sub-blocks of the interpolation sub-block; building a first coordinate system, wherein gain_a in the luma mapping relationship of the interpolation sub-block and multiple reference sub-blocks corresponding to the interpolation sub-block is used as a third coordinate axis, and a length and a width are used as a first coordinate axis and a second coordinate axis respectively, and performing trilinear interpolation based on the first coordinate system to generate a first interpolation parameter; building a second coordinate system, wherein gain_b in the luma mapping relationship of the interpolation sub-block and multiple reference sub-blocks corresponding to the interpolation sub-block is used as a third coordinate axis, and a length and a width are used as a first coordinate axis and a second coordinate axis respectively, performing trilinear interpolation based on the second coordinate system to generate a second interpolation parameter; building an interpolated luma mapping relationship of the interpolation sub-block based on the first interpolation parameter and the second interpolation parameters; and adjusting the luma value of the mapping sub-block in the image based on the luma mapping relationship, and adjusting the luma value of the pixel points in the interpolation sub-block in the image based on the interpolated luma mapping relationship, to generate the adjusted image.

If the luma of each sub-block is adjusted directly using the luma mapping relationship of each sub-block, it can result in a large difference in luma between different sub-blocks. This leads to an insufficient smoothness in the transition between sub-blocks. Therefore, interpolation methods can be used to calculate the luma mapping relationship of the sub-blocks.

The mapping sub-block and interpolation sub-block in the image are obtained. The mapping sub-block and the interpolating sub-block are pre-set. Each pixel point in the mapping sub-block can directly use the luma mapping relationship of the sub-block for the luma value adjustment, and each pixel point in the interpolator sub-block uses the interpolated luma mapping relationship for the luma value adjustment. For example, for the B image shown in FIG. 2, sub-blocks 1, 4, 17, and 20 can be directly adjusted for the luma of each sub-block using the luma mapping relationship of that sub-block. The other sub-blocks are the interpolation sub-blocks, and the luma value of each pixel point is adjusted using the interpolated luma mapping relationship.

For each interpolation sub-block, multiple reference sub-blocks of the interpolation sub-block are obtained, wherein the reference sub-blocks are adjacent sub-blocks of the interpolation sub-block. The reference sub-blocks are obtained based on a preset neighboring relationship. Exemplarily, for sub-block 6, sub-blocks 7, 10, and 11 can be set as the reference sub-blocks, or sub-blocks 5, 9, and 10 can be set as the reference sub-blocks. The present invention does not limit the manner in which the reference sub-block is set up.

After obtaining the interpolation sub-block, the parameters, such as gain_a and gain_b, from the luma mapping relationship of the interpolation sub-block and the corresponding multiple reference sub-blocks are obtained.

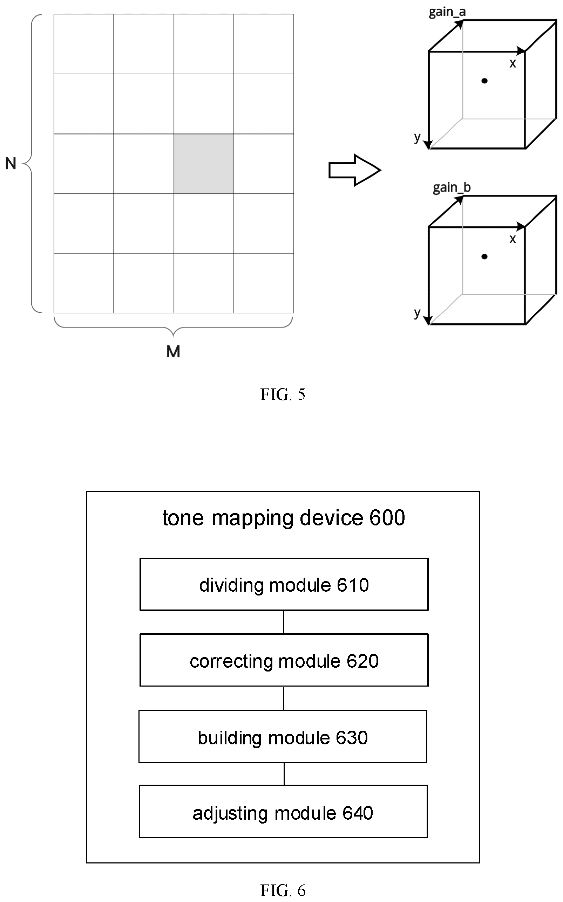

As shown in FIG. 5, FIG. 5 shows a schematic diagram of the coordinate axes for trilinear interpolation as illustrated by embodiments of the present invention. A first coordinate system is established in FIG. 5 with gain_a as a third coordinate axis such as the z-axis, length as a first coordinate axis such as the X-axis, and width as a second coordinate axis such as the Y-axis. Trilinear interpolation is performed in the coordinate system to generate a first interpolation parameter gain_a_inter. A second coordinate system is established by using gain_b as a third coordinate axis such as the z-axis, length as a first coordinate axis such as the X-axis, and width as a second coordinate axis such as the Y-axis. In this coordinate system, trilinear interpolation is performed to generate the second interpolation parameter gain_b_inter. In other embodiments of the present application, gain_a can also be used as the X-axis of the coordinate system, with length as the Y-axis and width as the Z-axis. The present invention does not limit the parameters used for the coordinate axes.

The first interpolation parameter and second interpolation parameter are brought back into the linear equation to obtain the interpolated luma mapping relationship of the sub-block.

For each mapping sub-block, a new luma value of each pixel point within the sub-block is calculated based on the luma mapping relationship of the sub-block, and the luma value of the pixel point is adjusted to the new value.

For each interpolation sub-block, a new luma value of each pixel point within the sub-block is calculated based on the interpolated luma mapping relationship of the sub-block, and the luma value of the pixel point is adjusted to the new value.

After adjusting the luma value of the pixel point within each sub-block, an adjusted image is generated.

In the above-mentioned embodiment, using a trilinear interpolation method to generate the mapping relationship of the interpolation sub-block enables smoother transitions between image sub-blocks.

In the above tone mapping method, the clipping threshold corresponding to each sub-block is obtained and the luma histogram of the sub-block is performed by equalization correction, thus making the adjustment of local contrast more flexible. Additionally, using a linear luma mapping relationship can enable smoother transitions between sub-blocks. Moreover, the tone mapping method in the present invention is simple and easy to implement, with low computational complexity, thus reducing resource overhead.

In one embodiment of the present invention, the step of solving a luma mapping equation based on the luma histogram and corrected histogram of the sub-blocks, and building a luma mapping relationship for each sub-block comprises calculating a change in a probability density function of the corrected histogram of each sub-block relative to the luma histogram, to obtain a first mapping relationship; using the first mapping relationship to transform a luma value corresponding to each grayscale level in the luma histogram of the sub-block, to obtain multiple transformed values; solving the luma mapping equation based on the luma value corresponding to each grayscale level in the sub-block and the multiple transformed values, to obtain the first luma mapping relationship corresponding to each grayscale level; and generating a luma mapping relationship corresponding to each grayscale level based on the first luma mapping relationship corresponding to each grayscale level, wherein the luma mapping relationship of a sub-block is the luma mapping relationship of all grayscale levels within the sub-block.

Assuming that the pixel density function of the luma histogram before equalization is $p(x)$ and the width of each grayscale level is $dx$, the number of pixels per grayscale level is $p(x)dx$. The pixel density function after equalization is assumed to be $p(y)$ and $p(y)$ is a constant. The method of histogram equalization is the $dy=p(x)dx$. The $p(x)dx$ pixels included in the $dx$ width of the luma histogram are mapped to the $dy$ width of the corrected histogram. The number of pixels remains unchanged before and after the mapping, but the density changes.

Therefore, it is possible to obtain the transformation relationship of the luma by calculating the transformation of the probability density function. For example, direct normalization (uniform distribution) can be used to calculate the transformation relationship. Alternatively, nonlinear mapping methods can be selected to build the transformation relationship of the luma, ensuring that pixel values and their corresponding cumulative distribution function (CDF) do not completely follow a uniform distribution, for example, exponential distribution, Rayleigh distribution, etc. Moreover, manual adjustment of the transformation relationship of the luma is possible. At this point, the transformation relationship of the luma is a nonlinear mapping curve for the purpose of amplifying and/or compressing part of the grayscale interval. The changing relationship of the luma obtained at this point is referred to as the first mapping relationship.

After obtaining the first mapping relationship, the numerical intervals corresponding to each grayscale level are transformed based on the first mapping relationship, thereby obtaining multiple transformed values. In the embodiment, the numerical interval corresponding to the grayscale level should include at least two luma values. Based on the first mapping relationship, some or all of the values in the numerical interval corresponding to the grayscale level are transformed to obtain multiple transformed values. Exemplarily, for grayscale level 1 in FIG. 3, its corresponding numerical interval is 0-31, where 0-31 can be brought into the first mapping relationship to obtain multiple transformed values. Alternatively, multiple values of the left boundary such as 0-5, and multiple values of the right boundary such as 27-31 can be taken in a first mapping relationship, thus obtaining multiple transformed values.

After transforming all the grayscale levels, the original luma value of each grayscale level and the corresponding transformed value of each luma value can be obtained. For each of these values for each grayscale level relationship, they are brought into solving linear equations such as Y = gain_a * X + gain_b to obtain the corresponding gain_a and gain_b, thus obtaining the luma mapping relationship corresponding to each grayscale level. Exemplarily, the original luma values 10, 13, ..., 30 of the pixel points in grayscale level 1 in FIG. 3 are brought into the first mapping relationship to obtain the corresponding transformed values 23, 29, ..., 63 of the pixel points. A linear equation is solved from these values to obtain the linear equation for grayscale level 1 in FIG. 3. For ease of distinction, this linear equation is referred to as the first luma mapping relationship.

After obtaining the first mapping relationship of each grayscale level, based on the first mapping relationship corresponding to each grayscale level, adjustments are made to generate the luma mapping relationship corresponding to each grayscale level. The luma mapping relationship of one sub-block includes the luma mapping relationships of all grayscale levels within the sub-block. Exemplarily, for the histogram shown in FIG. 3, the luma mapping relationship includes a luma mapping relationship of 8 grayscale levels. That is, the sub-block includes 8 linear equations.

Further, the step of generating a luma mapping relationship corresponding to each grayscale level based on the first luma mapping relationship corresponding to each grayscale level comprises obtaining the second luma mapping relationship corresponding to each grayscale level of the sub-block in the previous-frame image of the image; and combining the first luma mapping relationship corresponding to each grayscale level with the second luma mapping relationship to generate the luma mapping relationship corresponding to each grayscale level.

After obtaining the first luma mapping relationship of each grayscale level, a luma mapping relationship of the previous-frame image of the image is obtained, and the sub-blocks in the previous-frame image and the current-frame image correspond one-to-one.

For each grayscale level, its corresponding luma mapping relationship in the previous-frame image is obtained. That is to say, the luma mapping relationship in same grayscale level in the same sub-block is obtained. As shown in FIG. 3, grayscale level 1 in the histogram obtains the luma mapping relationship of grayscale level 1 in sub-block 1 in the previous-frame image. For ease of distinction, the luma mapping relationship is referred to as a second luma mapping relationship in the embodiment.

The first luma mapping relationship corresponding to each grayscale level is combined with the second luma mapping relationship to generate the luma mapping relationship corresponding to each grayscale level.

In the above-mentioned embodiment, fitting the luma value and the transformed value of the grayscale level builds the luma mapping relationship of each grayscale level. Each grayscale level has its own luma mapping relationship, thus allowing for greater flexibility in adjusting local contrast.

Further, the luma mapping equation, when it is a linear equation, comprises a slope and an intercept, and the step of adjusting the image based on the luma mapping relationship of each sub-block to generate an adjusted image comprises obtaining multiple reference sub-blocks of the sub-block, wherein the reference sub-blocks are adjacent sub-blocks of the sub-block; obtaining a luma mapping relationship corresponding to each grayscale level in the sub-block; building, for any grayscale level within a sub-block, a first coordinate system, wherein a slope in the luma mapping relationship at the grayscale level of the sub-block and multiple reference sub-blocks corresponding to the sub-block is used as a third coordinate axis, and a length and a width are used as a first coordinate axis and a second coordinate axis respectively, and performing trilinear interpolation based on the first coordinate system to generate a first interpolation parameter; building, for any grayscale level within a sub-block, a second coordinate system, wherein an intercept in the luma mapping relationship at the grayscale level of the sub-block and multiple reference sub-blocks corresponding to the sub-block is used as a third coordinate axis, and a length and a width are used as a first coordinate axis and a second coordinate axis respectively, and performing trilinear interpolation based on the second coordinate system to generate a second interpolation parameter; building an interpolated luma mapping relationship of the grayscale levels based on the first interpolation parameter and the second interpolation parameters; and adjusting the sub-blocks and multiple reference sub-blocks corresponding to the sub-blocks based on the interpolated luma mapping relationship of each grayscale level within the sub-block, to generate the adjusted image.

A linear equation for a luma mapping relationship of a grayscale level includes a slope and an intercept, and exemplarily, the linear equation takes the form of Y=gain_a*X+ gain_b, where gain_a is the slope and gain_b is the intercept.

For a sub-block, multiple reference sub-blocks of the sub-block are obtained. The reference sub-blocks are adjacent sub-blocks of the sub-block that are found based on a preset adjacency relationship. In the embodiment, the manner of selection of sub-blocks is limited. For example, for the B image shown in FIG. 2, the number of reference sub-blocks should be three, and the reference sub-blocks of sub-block 10 can be 11, 14, 15, or sub-blocks 9, 13, 14.

For any grayscale level within a sub-block, a slope first parameter in the luma mapping relationship at the grayscale level of the sub-block and multiple reference sub-blocks corresponding to the sub-block is used as a third coordinate axis, and a length and a width are used as a first coordinate axis and a second coordinate axis respectively. A trilinear interpolation is performed to generate a first interpolation parameter. The intercept is used as a third coordinate axis, and a length and a width are used as a first coordinate axis and a second coordinate axis, respectively. A trilinear interpolation is performed to generate a second interpolation parameter.

For a grayscale level, its luma mapping relationship in each reference sub-block is obtained. For example, when the reference sub-block of sub-block 10 is 11, 14, 15, for the grayscale level 1 of the sub-block, the luma mapping relationship in grayscale level 1 of the reference sub-block of 11, 14, 15 is obtained. Each sub-block has the same numerical interval of the grayscale level.

In the embodiment, trilinear interpolation is used to obtain the luma mapping relationship of the grayscale levels of the sub-blocks. When performing trilinear interpolation, it requires eight points in space for interpolation. In the embodiment, four sub-blocks need to be selected, with each sub-block representing one point. Therefore, four sub-blocks provide four points. When the reference sub-blocks of sub-block 10 in image B are 11, 14, 15 and when the length and the width are respectively used as the X-axis and the Y-axis, the coordinates of the four sub-blocks 10, 11, 14, 15 are (1, 2), (3, 2), (1, 4), (3, 4), respectively.

The slope gain_a in the grayscale level is used as the third coordinate axis such as Z-axis to build the first coordinate system, assuming that the gain_a of the sub-blocks 10, 11, 14, and 15 are 5, 6, 7, and 8, respectively, then the coordinate points of the four sub-blocks 10, 11, 14, and 15 in the coordinate system (1, 2, 5), (1, 2, 0), (3, 2, 6), (3, 2, 0), (1, 4, 7), (1, 4, 0), (3, 4, 8), (3, 4, 0) can be obtained. The coordinates of the third coordinate axis in the added points can be other values than 0, and the present invention does not limit this.

Once the eight coordinate points and their coordinates are obtained, then trilinear interpolation can be performed to generate a new point. The coordinates of the third axis of the new point are the gain_a of the interpolated luma relationship of the four sub-blocks. In the embodiment, the slope obtained by interpolation is referred to as the first interpolation parameter.

Similarly, the slope gain_b in the grayscale level is used as the third coordinate axis such as the Z-axis to build the second coordinate system, assuming that the gain_b of the sub-blocks 10, 11, 14, and 15 are 3, 4, 5, and 6, respectively, then, (1, 2, 3), (1, 2, 0), (3, 2, 4), (3, 2, 0), (1, 4, 5), (1, 4, 0), (3, 4, 6), and (3, 4, 0) can be obtained. Similarly, the coordinates of the third coordinate axis in the added points can be other values than 0, and the present invention does not limit this.

Once the eight coordinate points and their coordinates are obtained, then trilinear interpolation can be performed to generate a new point. The coordinates of the third axis of the new point are the gain_b of the interpolated luma relationship of the four sub-blocks. In the embodiment, the intercept obtained by interpolation is referred to as the second interpolation parameter.

The first interpolation parameter and second interpolation parameter are brought into the linear equation to generate the interpolated luma mapping relationship of the grayscale level.

After interpolating for each grayscale level, the interpolated luma mapping relationship of each grayscale level can be obtained.

The grayscale levels of the four sub-blocks, 10, 11, 14, and 15, all apply the interpolated luma mapping relationship.

For each pixel point in the four sub-blocks of 10, 11, 14, and 15, the original luma value of the pixel point in the image is brought into the interpolated luma mapping relationship to obtain a new luma value, and the luma of the pixel point is set to the new luma value. Exemplarily, for a pixel point in the image, assuming that its luma value is 100, it is determined that it belongs to the fourth grayscale level, and the interpolated luma mapping relationship of the fourth grayscale level is used to calculate the luma. For example, if the value 100 after transformation is 150, then the luma of the pixel point is set to 150.

In the above-mentioned embodiment, using a trilinear interpolation method to generate the mapping relationship of each grayscale level enables smoother transitions between image sub-blocks.

As shown in FIG. 6, FIG. 6 is a schematic block diagram of a tone mapping device 600 provided in the embodiments of the present invention. The tone mapping device 600 comprises a dividing module 610, a correcting module 620, a building module 630, and an adjusting module 640.

The dividing module 610 is configured for dividing an image into multiple sub-blocks, and obtaining a luma histogram of each sub-block, wherein the luma histogram is a frequency of pixel points at different grayscale levels within the sub-block.

The correcting module 620 is configured for obtaining a clipping threshold corresponding to each sub-block, correcting the luma histogram of each sub-block based on the clipping threshold corresponding to the sub-block, and generating a corrected histogram of each sub-block, wherein frequencies of different grayscale levels in the corrected histogram are evenly distributed.

The building module 630 is configured for solving a luma mapping equation based on the luma histogram and corrected histogram of the sub-blocks, and building a luma mapping relationship for each sub-block, wherein the luma mapping equation comprises a linear equation.

The adjusting module 640 is configured for adjusting the image based on the luma mapping relationship of each sub-block to generate an adjusted image.

In one embodiment of the present invention, the luma mapping equation is $Y = gain\_a \ast X + gain\_b$, where Y is the luma value of pixel points in the corrected histogram, X is the luma value of pixel points in the luma histogram, gain_a is a slope parameter of the luma mapping relationship, and gain_b is an intercept parameter of the luma mapping relationship.

In one embodiment of the present invention, the device further comprises a content detection module, wherein the content detection module is configured for performing a content detection on the image to generate the content weight of each pixel point; and building a luma histogram of the sub-block based on luma value and content weight of each pixel point within the sub-block.

In one embodiment of the present invention, the content detection module further comprises:

a convolution sub-module, configured for applying a preset convolution kernel to convolve the corresponding pixel region of each pixel point, and obtaining a convolution value of each pixel point, wherein the convolution kernel is configured for the content detection; and

a weight acquisition sub-module, configured for querying a preset weight table based on the convolution value corresponding to each pixel point to obtain the content weight of each pixel point.

In one embodiment of the present invention, the content detection module further comprises a histogram building sub-module, configured for determining the grayscale level of each pixel point based on the luma value of the pixel point, wherein each grayscale level corresponds to at least one luma value; and building the luma histogram based on all grayscale levels within the sub-block and the pixel points corresponding to each grayscale level, wherein the frequency of each grayscale level in the luma histogram is a sum of the number of pixel points corresponding to the grayscale level and the content weight of all pixel points corresponding to the grayscale level.

In one embodiment of the present invention, the device further comprises a clipping value generation module, wherein the clipping value generation module is configured for comparing an average luma of each sub-block with an average luma of the image to obtain a luma relationship of each sub-block; and adjusting a preset clipping value based on the luma relationship of each sub-block to obtain the clipping threshold corresponding to each sub-block.

In one embodiment of the present invention, the building module is specifically configured for solving the luma mapping equation based on the luma histogram and corrected histogram of the sub-blocks, and building a first luma mapping relationship of each sub-block; obtaining a second luma mapping relationship of each sub-block in a previous-frame image of the image, and combining the first luma mapping relationship and the second luma mapping relationship of each sub-block to build a luma mapping relationship of each sub-block.

In one embodiment of the present invention, the building module is specifically configured for solving the luma mapping equation based on the luma histogram and corrected histogram of the sub-blocks, and building a first luma mapping relationship of each sub-block; obtaining a second luma mapping relationship of each sub-block in a previous-frame image of the image; obtaining a deviation relationship between the first luma mapping relationship and the second luma mapping relationship of each sub-block; and using, if there exists a deviation relationship of a sub-block greater than a deviation threshold, the second luma mapping relationship of the sub-block as the luma mapping relationship of the sub-block.

In one embodiment of the present invention, the building module comprises a calculation sub-module, configured for calculating a change in a probability density function of the corrected histogram of each sub-block relative to the luma histogram, to obtain a first mapping relationship; a transformation sub-module, configured for using the first mapping relationship to transform a luma value corresponding to each grayscale level in the luma histogram of the sub-block, to obtain multiple transformed values; a fitting sub-module, configured for solving the luma mapping equation based on the luma value corresponding to each grayscale level in the sub-block and the multiple transformed values, to obtain the first luma mapping relationship corresponding to each grayscale level; and a generating sub-module, configured for generating a luma mapping relationship corresponding to each grayscale level based on the first luma mapping relationship corresponding to each grayscale level, wherein the luma mapping relationship of a sub-block is the luma mapping relationship of all grayscale levels within the sub-block.

In one embodiment of the present invention, the generating sub-module is specifically configured for obtaining the second luma mapping relationship corresponding to each grayscale level of the sub-block in the previous-frame image of the image; and combining the first luma mapping relationship corresponding to each grayscale level with the second luma mapping relationship to generate the luma mapping relationship corresponding to each grayscale level.

In one embodiment of the present invention, the luma mapping equation includes slope and intercept when it is a linear equation. The adjusting module is specifically configured for obtaining multiple reference sub-blocks of the sub-block, wherein the reference sub-blocks are adjacent sub-blocks of the sub-block; building, for any grayscale level within a sub-block, a first coordinate system, wherein a slope in the luma mapping relationship at the grayscale level of the sub-block and multiple reference sub-blocks corresponding to the sub-block is used as a third coordinate axis, and a length and a width are used as a first coordinate axis and a second coordinate axis respectively, and performing trilinear interpolation based on the first coordinate system to generate a first interpolation parameter; building, for any grayscale level within a sub-block, a second coordinate system, wherein an intercept in the luma mapping relationship at the grayscale level of the sub-block and multiple reference sub-blocks corresponding to the sub-block is used as a third coordinate axis, and a length and a width are used as a first coordinate axis and a second coordinate axis respectively, and performing trilinear interpolation based on the second coordinate system to generate a second interpolation parameter; building an interpolated luma mapping relationship of the grayscale levels based on the first interpolation parameter and the second interpolation parameters; and adjusting the sub-blocks and multiple reference sub-blocks corresponding to the sub-blocks based on the interpolated luma mapping relationship of each grayscale level within the sub-block, generating the adjusted image.

In one embodiment of the present invention, the adjusting module is specifically configured for obtaining a mapping sub-block and an interpolation sub-block from the image, wherein each pixel point in the mapping sub-block uses the luma mapping relationship of the sub-block to adjust the luma value, and each pixel point in the interpolation sub-block uses the interpolated luma mapping relationship to adjust luma value; obtaining multiple reference sub-blocks of the interpolation sub-block, wherein the reference sub-blocks are adjacent sub-blocks of the interpolation sub-block; building a first coordinate system, wherein gain_a in the luma mapping relationship of the interpolation sub-block and multiple reference sub-blocks corresponding to the interpolation sub-block is used as a third coordinate axis, and a length and a width are used as a first coordinate axis and a second coordinate axis respectively, and performing trilinear interpolation based on the first coordinate system to generate a first interpolation parameter; building a second coordinate system, wherein gain_b in the luma mapping relationship of the interpolation sub-block and multiple reference sub-blocks corresponding to the interpolation sub-block is used as a third coordinate axis, and a length and a width are used as a first coordinate axis and a second coordinate axis respectively, and performing trilinear interpolation based on the second coordinate system to generate a second interpolation parameter; building an interpolated luma mapping relationship of the interpolation sub-block based on the first interpolation parameter and the second interpolation parameters; and adjusting the luma value of the mapping sub-block in the image based on the luma mapping relationship, and adjusting the luma value of the pixel points in the interpolation sub-block in the image based on the interpolated luma mapping relationship, to generate the adjusted image.

In one embodiment of the present invention, the correcting module is specifically configured for performing multiple iterations until a stop condition is met, wherein each iteration comprises identifying an adjustment level in the histogram of a current round, wherein the adjustment level is a grayscale level of which a frequency is greater than the clipping threshold; determining an allocation value of the current round based on the adjustment level and setting the frequency of each adjustment level to the clipping threshold; calculating an increasing value of each grayscale level in an intermediate histogram of the current round by evenly distributing the allocation value of the current round, wherein if a frequency of a grayscale level is less than the clipping threshold, the frequency of the grayscale level in the intermediate histogram of a new round is a sum of the increasing value and the frequency of the current round; and if a frequency of a grayscale level is the clipping threshold, the frequency of the grayscale level in the intermediate histogram of a new round is the clipping threshold; and generating an intermediate histogram of a new round based on the frequencies of each grayscale level in the intermediate histogram of the new round, wherein the intermediate histogram in a first round of iteration is the luma histogram, and the stop condition comprises the inability to evenly distribute the allocation value to each grayscale level in an adjustment histogram, wherein the allocation value in the first round iteration is a sum of a frequency difference of all adjustment levels; and the frequency difference is the frequency difference between the frequency of each adjustment level in the intermediate histogram of the current round and the clipping threshold; and the allocation values of other rounds are a sum of a remaining total value and the frequency difference, wherein the remaining total value is a sum of all remaining values, and the remaining values are the increasing values that have not been added up.

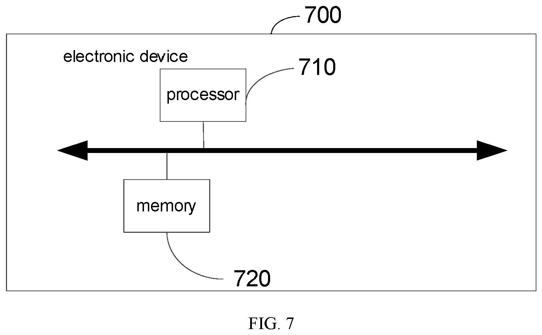

As shown in FIG. 7, FIG. 7 is a schematic block diagram of an electronic device 700 provided in the embodiments of the present invention. The electronic device 700 comprises a processor 710 and a memory 720,

wherein the processor 710, the memory 720, and each component are directly or indirectly electrically connected to achieve data transmission or interaction. For example, these components can be electrically connected to each other through one or more communication buses or signal lines. The memory 720 is configured to store computer programs, such as the software functional module depicted in FIG. 6, namely the tone mapping device 600. The tone mapping device 600 includes at least one software functional module stored in the form of software or firmware in the storage device 720 or embedded in the operating system (OS) of the electronic device 700. The processor 710 is configured to execute the executable modules stored in the memory 720, such as the software functional module or computer program included in the tone mapping device 600.

The memory 720 can be but is not limited to, random access memory (RAM), read-only memory (ROM), programmable read-only memory (PROM), erasable programmable read-only memory (EPROM), electrically erasable programmable read-only memory (EEPROM), and the like.

The processor 710 can be an integrated circuit chip with signal processing capability. The processor can be a general-purpose processor, comprising a central processing unit (CPU), network processor (NP), microprocessor, etc. It can also be a digital signal processor (DSP), application specific integrated circuit (ASIC), field-programmable gate array (FPGA), or other programmable logic devices, discrete gates, or transistor logic devices, as well as discrete hardware components. It can implement or perform each of the methods, steps, and logical block diagrams disclosed in the embodiment of the present invention. Or, the processor 710 can also be any conventional processor and so on.

The embodiments of the present invention further provide a non-volatile computer-readable storage medium (referred to as a storage medium), wherein the storage medium stores a computer program. The computer program, when executed by a computer such as the aforementioned electronic device 400, performs the tone mapping method as described above.

It should be noted that each embodiment described in the summary is progressively elaborated upon, with each embodiment focusing on the differences from the others. The identical or similar parts between the various embodiments can be cross-referenced as needed.

In the several embodiments provided in the present invention, it should be understood that the devices and methods disclosed can be implemented in other ways. The device embodiments described above are merely illustrative. For example, the flowcharts and diagrams in the drawings illustrate possible implementations, architectures, functions, and operations of devices, methods, and computer program products according to multiple embodiments of the present invention. At this point, each box in the flowchart or diagram can represent a module, program segment, or part of the code. Each part of the module, program segment, or code includes one or more executable instructions for implementing the specified logical functions. It should also be noted that in some alternative implementations, the functions indicated in the boxes may occur in a different order than those indicated in the drawings. For example, two consecutive boxes can actually be executed in parallel, and sometimes they can also be executed in reverse order, depending on the functionality involved. It should also be noted that each box in the block diagram and/or flowchart, and the combination of boxes in the block diagram and/or flowchart, can be implemented by specialized hardware systems designed to perform the specified functions or actions, or by a combination of specialized hardware and computer instructions.

Further, each functional module in each embodiment of the present invention can be integrated together to form a separate part, or each module may exist separately, or two or more modules may be integrated to form a separate part.

The functionality, when implemented as a software functional unit and sold or used as a stand-alone product, can be stored in a computer-readable storage medium. It is understood that the technical solution of the present invention, or that part of the technical solution that essentially contributes to the prior art, may be embodied in the form of a software product stored in a computer-readable storage medium comprising a number of instructions to cause a computer device (which may be a personal computer, a notebook computer, a server, or an electronic device, etc.) to perform all or some of the steps of the method described in various embodiments of the present invention. All or some of the steps of the method are described in various embodiments of the present invention. The aforementioned computer-readable storage medium comprises various media that can store program code, such as various media that can store program code, such as USB flash drives, mobile hard drives, Read-Only Memory (ROM), Random Access Memory (RAM), disks, or CD-ROMs.

The above is only a specific embodiment of the present invention, but the scope of protection of the present invention is not limited thereto. Any person skilled in the art can easily envisage changes or substitutions within the technical scope disclosed in the present invention, which should be encompassed within the scope of protection of the present invention. Therefore, the scope of protection of the present invention shall be stated to be subject to the scope of protection of the claims.

**Claims**

1. A tone mapping method, **characterized in that** the method comprises:

   dividing an image into multiple sub-blocks, and obtaining a luma histogram of each sub-block, wherein the luma histogram is a frequency of pixel points at different grayscale levels within the sub-block;
   obtaining a clipping threshold corresponding to each sub-block, correcting the luma histogram of each sub-block based on the clipping threshold corresponding to the sub-block, and generating a corrected histogram of each sub-block, wherein frequencies of different grayscale levels in the corrected histogram are evenly distributed;
   solving a luma mapping equation based on the luma histogram and the corrected histogram of the sub-blocks, and building a luma mapping relationship for each sub-block, wherein the luma mapping equation comprises a linear equation; and
   adjusting the image based on the luma mapping relationship of each sub-block to generate an adjusted image.

2. The method according to claim 1, wherein the method further comprises:

   performing a content detection on the image to obtain a content weight of each pixel point; and
   building the luma histogram of a sub-block based on a luma value and the content weight of each pixel point within the sub-block.

3. The method according to claim 2, wherein the step of performing a content detection on the image to obtain a content weight of each pixel point comprises:

applying a preset convolution kernel to convolve a corresponding pixel region of each pixel point, and obtaining a convolution value of each pixel point, wherein the convolution kernel is configured for the content detection; and querying a preset weight table based on the convolution value corresponding to each pixel point to obtain the content weight of each pixel point.

4. The method according to claim 2, wherein the step of building the luma histogram of a sub-block based on a luma value and the content weight of each pixel point within the sub-block comprises:

determining a grayscale level of each pixel point based on the luma value of the pixel point, wherein each grayscale level corresponds to at least one luma value; and building the luma histogram based on all grayscale levels within the sub-block and pixel points corresponding to each grayscale level, wherein a frequency of each grayscale level in the luma histogram is a sum of the number of pixel points corresponding to the grayscale level and a content weight of all pixel points corresponding to the grayscale level.

5. The method according to claim 1, wherein the step of obtaining a clipping threshold corresponding to each sub-block comprises:

comparing an average luma of each sub-block with an average luma of the image to obtain a luma relationship of each sub-block; and adjusting a preset clipping value based on the luma relationship of each sub-block to obtain the clipping threshold corresponding to each sub-block.

6. The method according to claim 1, wherein the step of solving a luma mapping equation based on the luma histogram and the corrected histogram of the sub-blocks, and building a luma mapping relationship for each sub-block comprises:

solving the luma mapping equation based on the luma histogram and the corrected histogram of the sub-blocks, and building a first luma mapping relationship of each sub-block; obtaining a second luma mapping relationship of each sub-block in a previous-frame image of the image; and combining the first luma mapping relationship and the second luma mapping relationship of each sub-block to build the luma mapping relationship of each sub-block.

7. The method according to claim 1, wherein the step of solving a luma mapping equation based on the luma histogram and the corrected histogram of the sub-blocks, and building a luma mapping relationship for each sub-block comprises:

solving the luma mapping equation based on the luma histogram and the corrected histogram of the sub-blocks, and building a first luma mapping relationship of each sub-block; obtaining a second luma mapping relationship of each sub-block in a previous-frame image of the image; obtaining a deviation relationship between the first luma mapping relationship and the second luma mapping relationship of each sub-block; and using, when the deviation relationship of a sub-block greater than a deviation threshold exists, the second luma mapping relationship of the sub-block as the luma mapping relationship of the sub-block.

8. The method according to claim 1, wherein the step of solving a luma mapping equation based on the luma histogram and the corrected histogram of the sub-blocks, and building a luma mapping relationship for each sub-block comprises:

calculating a change in a probability density function of the corrected histogram of each sub-block relative to the luma histogram, to obtain a first mapping relationship; using the first mapping relationship to transform a luma value corresponding to each grayscale level in the luma histogram of the sub-block, to obtain multiple transformed values; solving the luma mapping equation based on the luma value corresponding to each grayscale level in the sub-block and the multiple transformed values, to obtain the first luma mapping relationship corresponding to each grayscale level; and

generating a luma mapping relationship corresponding to each grayscale level based on the first luma mapping relationship corresponding to each grayscale level, wherein the luma mapping relationship of one sub-block is the luma mapping relationship of all grayscale levels within the sub-block.

9.  The method according to claim 8, wherein the step of generating a luma mapping relationship corresponding to each grayscale level based on the first luma mapping relationship corresponding to each grayscale level comprises:

obtaining a second luma mapping relationship corresponding to each grayscale level of a sub-block in a previous-frame image of the image; and
combining the first luma mapping relationship corresponding to each grayscale level with the second luma mapping relationship to generate the luma mapping relationship corresponding to each grayscale level.

10. The method according to claim 8, wherein the luma mapping equation, when being a linear equation, comprises a slope and an intercept, and the step of adjusting the image based on the luma mapping relationship of each sub-block to generate an adjusted image comprises:

obtaining multiple reference sub-blocks of the sub-block, wherein the reference sub-blocks are adjacent sub-blocks of the sub-block;
building, for any grayscale level within the sub-block, a first coordinate system, wherein the slope in the luma mapping relationship at the grayscale level of the sub-block and the multiple reference sub-blocks corresponding to the sub-block is used as a third coordinate axis, and a length and a width are used as a first coordinate axis and a second coordinate axis respectively, and performing trilinear interpolation based on the first coordinate system to generate a first interpolation parameter;
building, for any grayscale level within the sub-block, a second coordinate system, wherein the intercept in the luma mapping relationship at the grayscale level of the sub-block and multiple reference sub-blocks corresponding to the sub-block is used as a third coordinate axis, and a length and a width are used as a first coordinate axis and a second coordinate axis respectively, and performing trilinear interpolation based on the second coordinate system to generate a second interpolation parameter;
building an interpolated luma mapping relationship of the grayscale level based on the first interpolation parameter and the second interpolation parameters; and
adjusting the sub-block and multiple reference sub-blocks corresponding to the sub-block based on the interpolated luma mapping relationship of each grayscale level within the sub-block, to generate the adjusted image.

11. The method according to claim 1, wherein the luma mapping equation is

$$Y = gain\_a * X + gain\_b,$$

where Y is a luma value of pixel points in the corrected histogram, X is a luma value of pixel points in the luma histogram, gain_a is a slope parameter of the luma mapping relationship, and gain_b is an intercept parameter of the luma mapping relationship.

12. The method according to claim 11, wherein the step of adjusting the image based on the luma mapping relationship of each sub-block to generate an adjusted image comprises:

obtaining a mapping sub-block and an interpolation sub-block from the image, wherein each pixel point in the mapping sub-block uses the luma mapping relationship of the sub-block to adjust the luma value, and each pixel point in the interpolation sub-block uses an interpolated luma mapping relationship to adjust the luma value;
obtaining multiple reference sub-blocks of the interpolation sub-block, wherein the reference sub-blocks are adjacent sub-blocks of the interpolation sub-block;
building a first coordinate system, wherein gain_a in the luma mapping relationship of the interpolation sub-block and the multiple reference sub-blocks corresponding to the interpolation sub-block is used as a third coordinate axis, and a length and a width are used as a first coordinate axis and a second coordinate axis respectively, and performing trilinear interpolation based on the first coordinate system to generate a first interpolation parameter;
building a second coordinate system, wherein gain_b in the luma mapping relationship of the interpolation sub-block and the multiple reference sub-blocks corresponding to the interpolation sub-block is used as a third axis, and a length and a width are used as a first coordinate axis and a second coordinate axis respectively, and performing trilinear interpolation based on the second coordinate system to generate a second interpolation parameter;

building the interpolated luma mapping relationship of the interpolation sub-block based on the first interpolation parameter and the second interpolation parameter; and

adjusting the luma value of the mapping sub-block in the image based on the luma mapping relationship, and adjusting the luma value of the pixel points in the interpolation sub-block in the image based on the interpolated luma mapping relationship, to generate the adjusted image.

13. The method according to any one of claims 1 to 12, wherein the step of correcting the luma histogram of each sub-block based on a clipping threshold corresponding to the sub-block, and generating a corrected histogram of each sub-block comprises:

performing multiple iterations until a stop condition is met, wherein each iteration comprises:

identifying an adjustment level in a histogram of a current round, wherein the adjustment level is a grayscale level of which a frequency is greater than the clipping threshold;

determining an allocation value of the current round based on the adjustment level and setting a frequency of each adjustment level to the clipping threshold;

calculating an increasing value of each grayscale level by evenly distributing the allocation value of the current round to an intermediate histogram of the current round, wherein

when a frequency of a grayscale level is less than the clipping threshold, a frequency of the grayscale level in an intermediate histogram of a new round is a sum of the increasing value and the frequency of the current round; and

when a frequency of a grayscale level is the clipping threshold, a frequency of the grayscale level in an intermediate histogram of a new round is the clipping threshold; and

generating an intermediate histogram of a new round based on the frequency of each grayscale level in the intermediate histogram of the new round, wherein

an intermediate histogram in a first round of iteration is the luma histogram, and the stop condition comprises an inability to evenly distribute the allocation value to adjust each grayscale level in a histogram, wherein an allocation value in the first round of iteration is a sum of a frequency difference of all adjustment levels; and the frequency difference is a frequency difference between the frequency of each adjustment level in the intermediate histogram of the current round and the clipping threshold; and allocation values of other rounds are a sum of a remaining total value and the frequency difference, wherein the remaining total value is a sum of all remaining values, and the remaining values are increasing values that have not been added up.

14. A tone mapping device, **characterized in that** the device comprises:

a dividing module, configured for dividing an image into multiple sub-blocks, and obtaining a luma histogram of each sub-block, wherein the luma histogram is a frequency of pixel points at different grayscale levels within the sub-block;

a correcting module, configured for obtaining a clipping threshold corresponding to each sub-block, correcting the luma histogram of each sub-block based on the clipping threshold corresponding to the sub-block, and generating a corrected histogram of each sub-block, wherein frequencies of different grayscale levels in the corrected histogram are evenly distributed;

a building module, configured for solving a luma mapping equation based on the luma histogram and the corrected histogram of the sub-blocks, and building a luma mapping relationship for each sub-block, wherein the luma mapping equation comprises a linear equation; and

an adjusting module, configured for adjusting the image based on the luma mapping relationship of each sub-block to generate an adjusted image.

15. An electronic device, **characterized by** comprising a processor and a memory, wherein the processor and the memory communicate with each other through a bus; the memory stores program instructions executable by the processor; and the processor calls the program instructions to be capable of executing the tone mapping method according to any one of claims 1 to 13.

16. A computer-readable storage medium, **characterized in that** the computer-readable storage medium stores computer program instructions; and the computer program instructions, when read and executed by a computer, perform the tone mapping method according to any one of claims 1 to 13.

dividing an image into multiple sub-blocks, and obtaining a luma histogram of each sub-block, wherein the luma histogram is a frequency of pixel points at different grayscale levels within the sub-block ⸺ S110

obtaining a clipping threshold corresponding to each sub-block, correcting the luma histogram of each sub-block based on the clipping threshold corresponding to the sub-block, and generating a corrected histogram of each sub-block, wherein frequencies of different grayscale levels in the corrected histogram are evenly distributed ⸺ S120

solving a luma mapping equation based on the luma histogram and the corrected histogram of the sub-blocks, and building a luma mapping relationship for each sub-block, wherein the luma mapping equation comprises a linear equation ⸺ S130

adjusting the image based on the luma mapping relationship of each sub-block to generate an adjusted image ⸺ S140

FIG. 1

| 1 | 2 | 3 | 4 |
|---|---|---|---|
| 5 | 6 | 7 | 8 |
| 9 | 10 | 11 | 12 |
| 13 | 14 | 15 | 16 |
| 17 | 18 | 19 | 20 |

A

B

FIG. 2

FIG. 3

FIG. 4

FIG. 5

FIG. 6

700

electronic device

710

processor

memory

720

FIG. 7

## INTERNATIONAL SEARCH REPORT

| International application No. |
| --- |
| **PCT/CN2024/078170** |

**A.   CLASSIFICATION OF SUBJECT MATTER**

G06T5/90(2024.01)i

According to International Patent Classification (IPC) or to both national classification and IPC

**B.   FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 分块, 分区, 裁剪, 剪切, 阈值, 幅值, 均衡化, 色调映射, 对比度, 增强, block, region, segment, cut, threshold, amplitude, equalize, tone mapping, contrast, enhancement

**C.   DOCUMENTS CONSIDERED TO BE RELEVANT**

| Category* | Citation of document, with indication, where appropriate, of the relevant passages | Relevant to claim No. |
| --- | --- | --- |
| X | CN 114140348 A (SHENZHEN LIZHOU INTERNATIONAL TECHNOLOGY CO., LTD.) 04 March 2022 (2022-03-04) description, paragraphs 0066-0124 and 0167-0171 | 1-16 |
| X | CN 110751603 A (CHANGCHUN INSTITUTE OF OPTICS, FINE MECHANICS AND PHYSICS, CHINESE ACADEMY OF SCIENCES) 04 February 2020 (2020-02-04) description, paragraphs 0050-0108 | 1-16 |
| A | CN 114092361 A (ZHEJIANG XINSHENG ELECTRONIC TECHNOLOGY CO., LTD.) 25 February 2022 (2022-02-25) entire document | 1-16 |
| A | CN 112365424 A (KUNMING INSTITUTE OF PHYSICS) 12 February 2021 (2021-02-12) entire document | 1-16 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 October 2024** | **16 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/078170**

| Patent document cited in search report | | | Publication date (day/month/year) | Patent family member(s) | Publication date (day/month/year) |
|---|---|---|---|---|---|
| CN | 114140348 | A | 04 March 2022 | None | |
| CN | 110751603 | A | 04 February 2020 | None | |
| CN | 114092361 | A | 25 February 2022 | None | |
| CN | 112365424 | A | 12 February 2021 | None | |

Form PCT/ISA/210 (patent family annex) (July 2022)